# EUROPEAN PATENT SPECIFICATION

(11) **EP 1 400 375 B1**
(45) Date of publication and mention of the grant of the patent: **10.05.2006**
(21) Application number: 03103389.7
(22) Date of filing: 15.09.2003
(51) Int. Cl.: B60C 11/01, B29D 30/06

(54) **A truck steer tire, a mold and a method of molding**
LKW Lenkreifen, Reifenformwerkzeug und Verfahren zum Formen
Pneumatique pour essieu directeur de camion, moule et procédé de moulage

(30) Priority: 19.09.2002 US 411966 P; 11.02.2003 US 365196
(43) Date of publication of application: 24.03.2004
(73) Proprietor: THE GOODYEAR TIRE & RUBBER COMPANY, Akron, Ohio 44316-0001 (US)
(72) Inventor: Feider, Georges Gaston, L-8606, Bettborn (LU); Loeffler, Ronald Lawrence, Akorn 44303 (US); Blackiston III, Paul Keyser, Ridgeley 26753 (US); Sevart, Jeffrey Leon, Akron 44313 (US); Paulin, Kenneth Harvey, Uniontown 44685 (US); Harden, Richard Winfield Jr, Tallmadge 44278 (US)
(74) Representative: Kutsch, Bernd

(56) References cited:
- EP-A- 0 318 287
- EP-A- 0 319 860
- PATENT ABSTRACTS OF JAPAN vol. 007, no. 179 (M-234), 9 August 1983 (1983-08-09) & JP 58 081806 A (SUMITOMO GOMU KOGYO KK), 17 May 1983 (1983-05-17)
- PATENT ABSTRACTS OF JAPAN vol. 011, no. 086 (M-572), 17 March 1987 (1987-03-17) & JP 61 241203 A (BRIDGESTONE CORP), 27 October 1986 (1986-10-27)

## Description

### Field of the Invention

The present invention relates to truck tires for steer axles, a unique mold and method of molding same.

### Background of the Invention

The use of treads specifically designed for the steer axle of truck tires has been directed to various forms of rib-type tires. This nondriving axle exhibits cornering and turning loads as well as straight line running loads. Some skilled in the art believe the tread ribs should ideally have a sharp edge adjacent to the circumferential grooves to provide improved handling.

These sharp edges during normal use can exhibit irregular tread wear. High wear erosion is common in the shoulder region of the tread. This problem was addressed in US-A-4,480,671 issued November 6, 1984, to Giron. As shown in Figure 2, Giron disclosed the use of a laterally located circumferentially continuous rib 4 that under normal driving conditions is in contact with the road. The force or pressure exerted by the rib 4 on the road being less than the force or pressure of the shoulder rib 6. This prior art tire 2 relied on the laterally located rib to protect the sharp edge of the shoulder rib. One such tire 2 is believed to be the Michelin XZA-1+ steer tire.

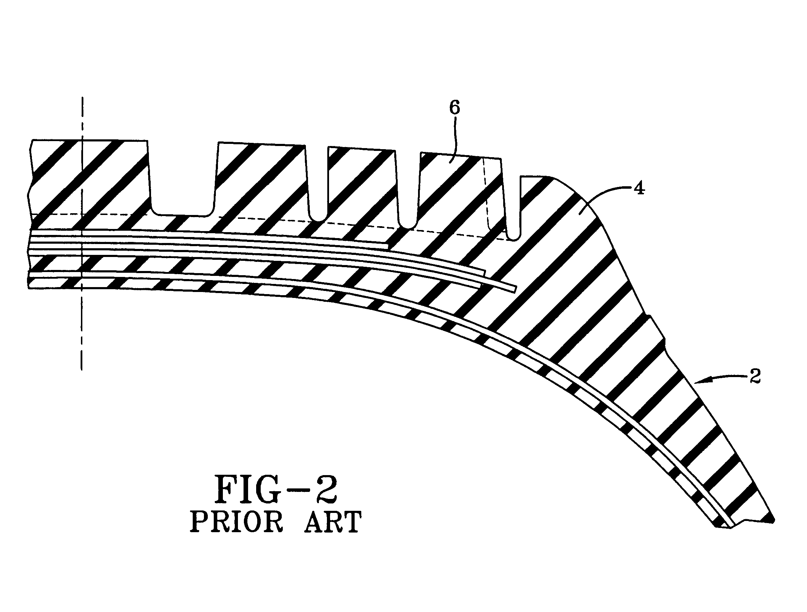

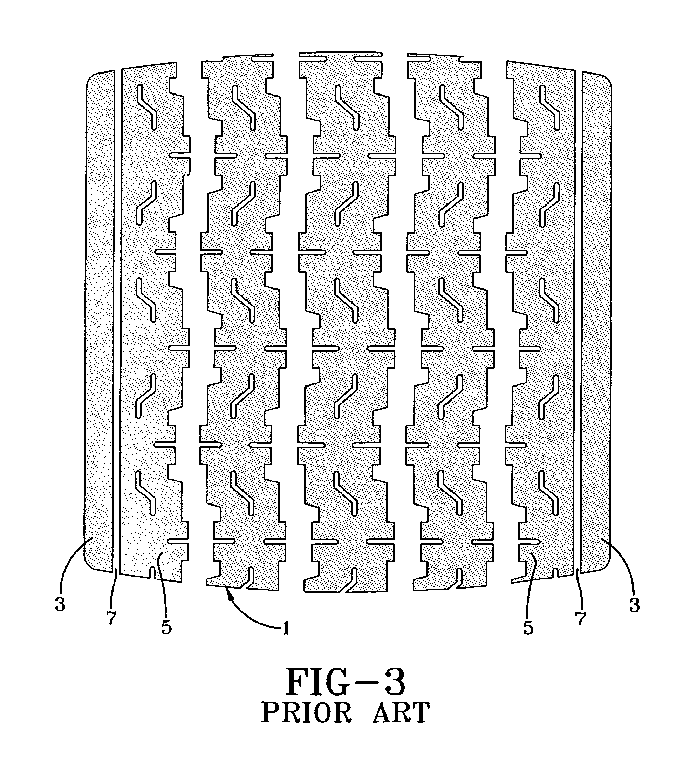

An alternative design approach was to have a nonrecessed circumferential rib 3 adjacent a narrow circumferentially continuous groove 7 and shoulder rib 5. Such a tire was commercially sold as the Goodyear G259 steer tire and that tire 1 exhibits a static footprint or tread contact patch as shown in Figure 3.

Yet another design approach was demonstrated by Bridgestone Corporation's R227 Steer Tire which has a narrow circumferentially continuous bent groove in the side of a shoulder rib. The narrow bent groove creates reduced shoulder pressure and acts as a decoupling groove as is taught in US-A-4,995,437.

All of these design approaches rely on a decoupling groove in the tread. These features will effectively reduce shoulder wear when the tread is new. This has the remarkable benefit of inhibiting the onset of irregular wear. The tread shoulder is most prone to setting up irregular wear when the tread is new and is at a maximum tread thickness.

What is troubling though is that the decoupling ribs in the tread are prone to tearing and cutting while the decoupling groove can be prone to stone holding. As a result, this portion of the tread is potentially vulnerable to damage when the tire strikes a curb or other hard obstruction.

Another problem associated with the use of decoupling grooves in a tread is the inability to reliably mold a good decoupling groove in a lateral orientation. In the past, it has been common practice to use tire molds in a steer tire application where the decoupling groove was in the segmented tread ring. Accordingly, steer tires when molded with a tread design suitable for use on a steer wheel position had been easier to mold with decoupling grooves exending radially or vertically inwardly. Laterally extending decoupling grooves had problems at least to the degree that is associated with molding and uniformity.

In order to insure that the tread is effectively decoupled from the sidewall, that is the tread shoulder remains somewhat independent of the forces exerted by the sidewall, a new and vastly improved way of decoupling must be provided.

The present invention provides a way to effectively decouple the tread shoulder.

The effective decoupling of the tread shoulder occurs in the treadwall region of the tread at a location radially outward or preferably directly above the belt structure and, thus, above a tread buff line when the tire casing is prepared for retreading.

EP-A-0 319 860 discloses a tire having a side groove in the axially outer treadwall according to the preamble of claim 1.

### Summary of the Invention

A radial ply pneumatic tire for the steer axle of a commercial truck is described. The tire has a tread and a casing. The casing has at least one radial ply extending to a pair of radially inner beads and a belt reinforcing structures disposed radially outward of the ply.

The tread is disposed radially outward of the casing. The tread has a pair of shoulder tread ribs; each shoulder rib has an axially outer treadwall. Each axially outer treadwall has a laterally inward extending circumferentially continuous side groove. The side groove has a groove depth (d) and a minimum groove width (w). The minimum groove width (w) is about 5 mm or greater, preferably in the range of 5 mm and 7 mm and the ratio of groove depth to the minimum groove width is 1.0 to 2.4, preferably 1.6 to 2.4. The side groove has a groove base having a radiused profile R, the radially inner portion of R being at least equal to one half the minimum groove width (w). The tire also has a pair of sidewalls, one sidewall extending radially inwardly from each shoulder rib toward each radially inner bead.

Each side groove has a centerline C defined as the midway line between the groove walls. The centerline C between groove walls relative to a normal line to sidewall preferred angle is zero. The acceptable range would be no greater than +10 degrees above horizontal (axis of rotation) and not exceeding an angle which is concentric or tangent to the tread radius to -10 degrees below the normal line to the sidewall.

The groove walls of the side groove may have a positive draft angle. In at least one embodiment the radially upper groove wall has a negative angle θ

Alternatively, the distance between groove walls of the side grooves can narrow as the side groove extends from the base of the side groove to the axially outer treadwall.

The tread has at least one full depth groove extending from the surface of the tread to a bottom, the radial depth of the at least one full depth groove defines the tread's nonskid depth, wherein the radial thickness of the tread at the axially outer tread wall as measured from the side groove to the tread surface at least equals at least 50% of the tread's nonskid depth.

The present invention also includes a mold for forming the tire. The mold has a radially outer tread forming portion, the radially outer tread forming portion forms an annular closed ring by two segments abutting circumferentially or a plurality of segments abutting radially. The mold has a pair of treadwall/sidewall forming plates. Each of the treadwall/sidewall forming plates extends radially outwardly beyond the casing. Each treadwall/sidewall forming plate has a laterally inwardly extending annular rib for forming a side groove in the tread, the side groove being circumferentially continuous and located at or radially outward of the belt reinforcing structure.

The invention further includes a method of molding the tire, the method having the steps of:
placing the tire in a mold, the mold having a tread forming portion and a pair of annular treadwall/sidewall forming plates;
applying heat and pressure to form the tread and sidewalls of the tire's exterior;
forming a laterally extending circumferentially continuous side groove radially at or outward of the belt reinforcing structure and radially inward of the outer surface of the tread along each lateral tread edge, wherein the step of forming the side grooves is accomplished by an annular rib in each of the annular treadwall/sidewall forming plates;
curing the tire;
opening the mold; and
removing the cured tire.

### Definitions

"Apex" means an elastomeric filler located radially above the bead core and between the plies and the turnup ply.

"Bead" means that part of the tire comprising an annular tensile member wrapped by or otherwise anchored by ply cords and shaped, with or without other reinforcement elements such as flippers, chippers, apexes, toe guards and chafers, to fit the design rim.

"Belt Structure" means at least two annular layers or plies of parallel cords, woven or unwoven, underlying the tread, unanchored to the bead, and having both left and right cord angles in the range from 15° to 70° with respect to the circumferential centerline of the tire.

"Casing" means the carcass, belt structure, beads, sidewalls, and all other components of the tire excepting the tread and undertread. The casing may be new, unvulcanized rubber or previously vulcanized rubber to be fitted with a new tread.

"Chafers" refers to narrow strips of material placed around the outside of the bead to protect cord plies from the rim, distribute flexing above the rim, and to seal the tire.

"Circumferential" means lines or directions extending along the perimeter of the surface of the annular tread perpendicular to the axial direction.

"Cord" means one of the reinforcement strands of which the belts and plies in the tire are comprised.

"Lateral" means an axial direction.

"Ply" means a continuous layer of elastomeric rubber-coated parallel cords.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Shoulder" means the upper portion of sidewall just below the tread edge; tread shoulder or shoulder rib means that portion of the tread near the shoulder.

"Sidewall" means that portion of a tire between the tread and the bead.

"Tread" means a rubber or elastomeric component including that portion of the tire that comes into contact with the road under normal inflation and load.

### Brief Description of the Drawings

The invention will be described by way of example and with reference to the accompanying drawings in which:
Figure 1 is a cross-sectional view of a tire according to the present invention.
Figure 2 is a partial cross-sectional view of a prior art tire disclosed in US-A-4,480,671.
Figure 3 is an exemplary static footprint of a prior art tire commercially sold as the Goodyear G259.
Figure 4 is an illustration of a prior art exemplary tire footprint exhibiting shoulder rib cupping after 100,000 miles of use.
Figure 5 is an exemplary tire footprint of the present invention depicting the pressure distribution of the tire as molded.
Figure 6 is an enlarged cross-section of one-of the tire shoulders of the preferred tire according to the invention.
Figures 7A, 7B, 7C and 7D are cross-sections of an alternative embodiment tire shoulders of the present invention.
Figure 8 is a mold for the present invention shown in a half portion closed about a tire to be molded, the mold for molding the tire of the present invention.
Figure 9 is one of the two annular treadwall/sidewall plates taken from Figure 8 and shown in a perspective view.
Figure 10 is an enlarged cross-sectional view of the tire of the present invention showing a multiple radiused profile decoupling groove.
Figures 11A and 11B show a test result comparison of the decoupling grooves having a full single radius and the multiple radiused profile of Fig. 10, respectively.

### Detailed Description of the Invention

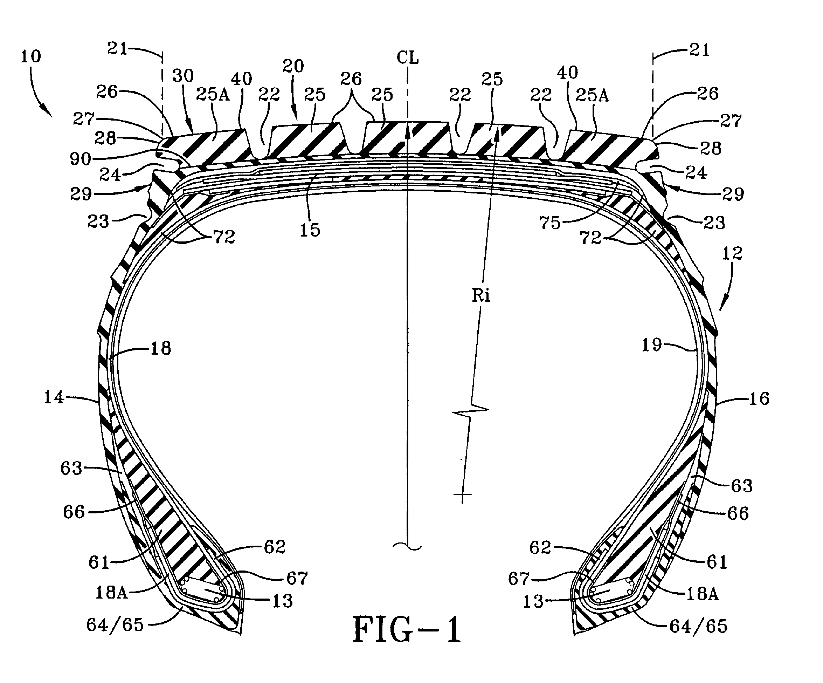

With reference to Fig. 1, a cross-section of a pneumatic radial tire 10 for use on steering axles is illustrated.

The tire 10 has a tread 20 and a casing 12. The casing 12 has two sidewalls 14, 16 one or more radial plies 18 extending from and preferably wrapped about or otherwise secured to two annular beads 13 and a belt reinforcement structure 15 located radially between the tread 20 and the plies 18.

The plies 18 and the belt reinforcement structure 15 are cord reinforced elastomeric material, the cords being preferably steel wire filaments and the elastomer preferably being a vulcanized rubber material. Similarly, the annular beads 13 have steel wires wrapped into a bundle known as the bead core.

A liner 19 component of preferably halobutyl rubber forms a somewhat air impervious chamber to contain the air pressure when the tire 10 is inflated.

The casing 12 of the preferred embodiment of the invention, as illustrated in Fig. 1, employed a bead 13 having an 8x10x9 hexagonal bead core having an elastomeric apex 61 radially above the bead 13. The ply turnup 18A in the bead area was reinforced with a flipper 67, chipper 62, gum and fabric chafers 64,65, gum strips 66 and elastomeric wedges 63.

Additionally, the belt reinforcement structure 15 included gum strip of rubber material 75 and a plurality of elastomeric strips or wedges 72 in the lateral extremes of the belts 15 in proximity of the side grooves 24. Although not required to the practice of the inventive concept, these features are disclosed as features employed in the preferred embodiment.

The tread 20 has a plurality of circumferentially continuous grooves 22 and a plurality of tread ribs 25, including a pair of shoulder ribs 25A, one shoulder rib 25A being adjacent each lateral edge 21 of the tread 20.

The distance halfway between the lateral edges 21 of the tread defines the circumferential centerline CL of the tread 20.

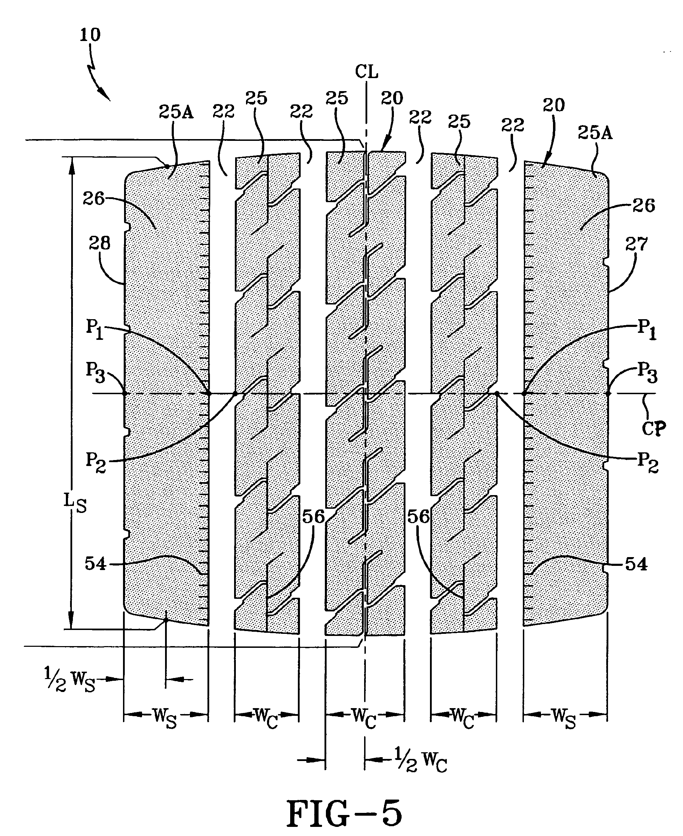

The radially outer road contacting surfaces 26 of the plurality of tread ribs 25, 25A define a radially outer tread surface 30. The outer tread surface 30 is adjacent to and extends between the pair of lateral edges 21. A plurality of sipes or incisions 54 and 56 may be employed on the tread 20 as shown in Figure 5.

As shown in Fig. 1, a laterally inwardly extending circumferential side groove 24 is located in a treadwall 29 of each shoulder rib 25A.

As shown in Fig. 5, the tread 20, when new, exhibits a static footprint pressure distribution when the tire is normally loaded, such that the pressure exerted along the axial centerline C of the footprint on the shoulder rib 25A adjacent the lateral edge 21 is P3, on the shoulder rib 25A adjacent the circumferential groove 22 is P1, on the rib 25 laterally adjacent the shoulder rib 25A at the groove 22 is P2. The relationship of the pressure distribution is P1 is about equal to P2; and about equal to P3 in one preferred embodiment of the invention.

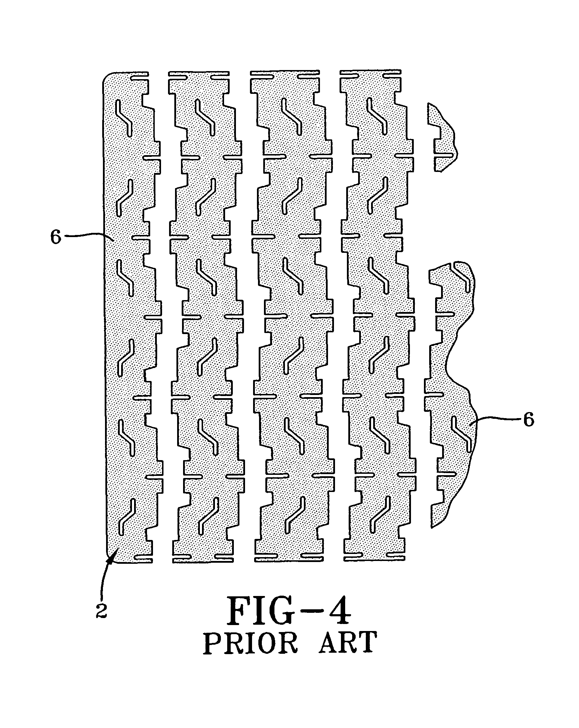

As shown in Figure 4, a prior art tire 1, the G259 after 100,000 miles of wear can exhibit considerable cupping wear in the shoulder rib region 2. The decoupling or recessed lateral rib 6 is noticeably worn away from road contact at this wear condition. The tire 10 according to the preferred embodiment of the invention, as illustrated in Fig. 1, has a much more uniform wear in the same shoulder regions of the tread 20. Both the prior art tire 1 and the test tires 10 were of similar size, 11R22.5, and similarly loaded and inflated during the evaluations.

As shown in Figures 1 and 5, one embodiment of the invention has the above-described pressure distribution exhibited by the exemplary tire 10 which is achieved by effectively progressively increasing the width W_{S} of the tread shoulder rib 25A from the point 40 of the change in curvature to the lateral edge 21. This added rubber area effectively provides more material in an area of high wear propensity and decreases the pressure in the area by spreading the load over a wider rib. The area directly above or adjacent the side grooves 24 improves the maintenance of the radius of the shoulder or edge 27 of the shoulder rib 25A.

Interestingly an upper limit in the amount of pressure change must be maintained wherein P3 should not exceed P1 by 20%, preferably 10% or less. If too much rubber is added to the shoulder rib 25A above the decoupling grooves 24, the area adjacent the circumferential groove 22 can become too lightly loaded. When this condition occurs a phenomena known as erosion wear or river wear can occur adjacent the groove 22. To prevent this problem from occurring a balance must be maintained. Ideally, both edges across the shoulder ribs 25A wear at the same uniform rate. This condition achieves a most beneficial projected mileage life of the tread.

In the exemplary tire of Fig. 1 one embodiment of the invention shows the tread radius of curvature Rᵢ was selected to be a single radius of curvature. A single radius Rᵢ provides a simple mold shape. Alternatively multiple radii of curvature Rᵢ can be used. All of these tread shapes are feasible due in part to the side grooves 24 in the upper treadwall 29 enabling the tire engineer to select the tread shape most preferred for the particular application.

Ideally the side grooves 24 are positioned at a radial height at or above the edges of the belt structure as is illustrated. Under normal load the side grooves 24 compress slightly causing the tread to exhibit a lower contact pressure at the tread ribs 25A and reduce torquing of the shoulder rib. These side grooves 24 comprise groove sidewalls 24B, 24C and a radius profile R and preferably have an end or groove base 24A formed by a large or full radius R_{G} in the lower portion of the radius profile R, the large or full radius R_{G} extending a fixed or predetermined distance d inwardly toward the underlying belt layers 15.

As the tire rotates under load, the decoupling grooves 24 compress. This ability to compress greatly facilitates the ability of the tread to maintain its shape in turning and cornering maneuvers.

The tread 20 at the axially outer portion of the tread shoulder rib 25A has a treadwall 29. The treadwall 29 as shown may include a radially outer rounded surface 28 extending to the edge 27. As shown, this portion of the tread shoulder rib 25A lies radially outward of the side grooves 24.

As the tread 20 wears, the edge 27 moves axially outward along the rounded surface 28. This feature enables the tread to compensate for wear in that tread elements as they wear generally get stiffer. As the edge 27 wears, it moves outwardly. The edge 27 moves over more of the side grooves 24. This means the stiffness-increase, due to wear, is to a large extent dampened or minimized. Additionally, as the edge 27 moves outwardly, the surface area 26 of the rib 25A also increases in width. This means the contact pressure can actually reduce slightly as the tread 20 wears.

As shown in Figure 5, when the tread is new the footprint or contact patch of the tire exhibits a contact pressure as measured along a line CP spaced equidistant between a leading edge and a trailing edge of the tires normally loaded and normally inflated static condition. The normally inflated condition as used herein means the design inflation pressure P_{N}. At the edge 27 of rib 25A intersecting the line CP a contact pressure P₃ is shown. On the opposite side of the rib 25A adjacent the groove 22 intersecting line CP a contact pressure P₁ is shown. On the opposite groove wall of adjacent rib 25 along the line CP a contact pressure P₂ is shown. These contact pressures can be adjusted upward by elevating the edge 27 relative to the contour of the central portion of the tread 20 as defined by the radius Rᵢ or lowered by lowering the edge 27 relative to the contour of the central portion of the tread 20.

An important feature of the preferred embodiment tire is that the axial widths W_{C} of the tread ribs 25 are actually smaller in width than the axial width W_{S} of the shoulder ribs 25A. These are average widths as measured halfway across each respective tread rib 25 and ribs 25A. This feature helps insure the shoulder ribs 25A can have an overall lower average pressure than the central ribs portion of the tread. Ideally the shoulder ribs 25A have a contact pressure equal to or less than the central ribs 25. The desired pressure distribution relationships are achieved by a combination of tread arc curvatures, rib width variations and the unique side grooves 24. The side grooves 24 enable the tire designer to stiffen or soften the tread edge 27 by simply adjusting the depth, width or shape of the grooves 24, their radial location or their axial extent. These features can be tuned individually or collectively to enhance tire performance and tread wear. This is very beneficial in several ways not the least of which is achieving a more durable tread that wears uniformly without requiring a vertical tread decoupling rib which had been considered the most reliable way to design a tread for a steer tire.

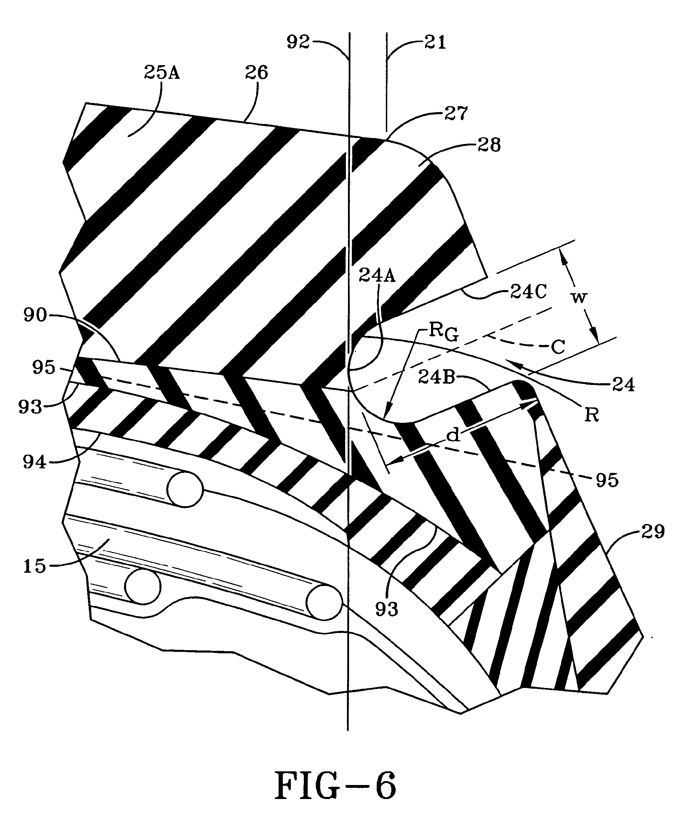

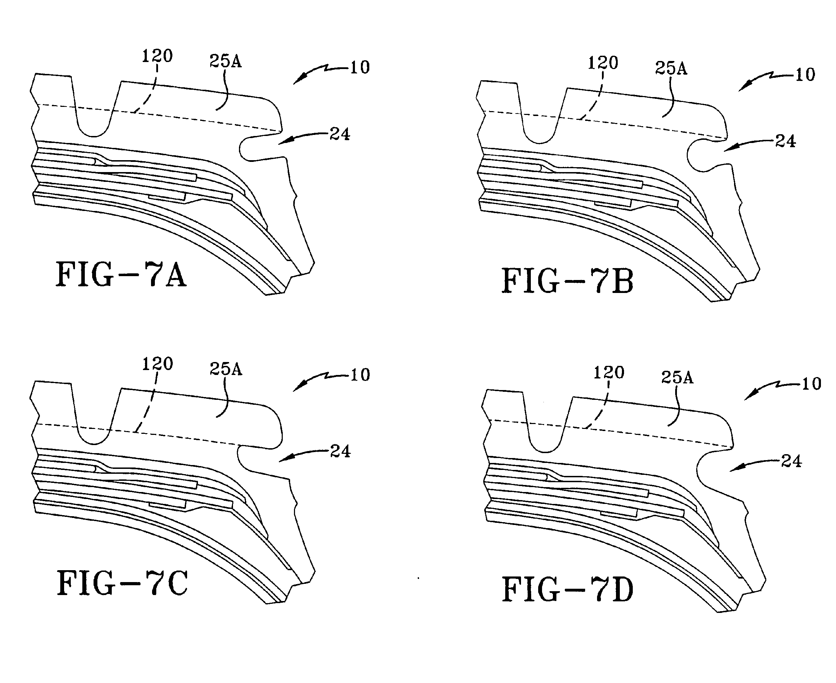

As shown the radial location of the side grooves 24 can be at the location of the lateral outermost edge of the belts 15 as in Figures 1 and 6 or radially above the outermost edge belts 15 as in Figures 7A-7D.

A second and even more important feature is the side grooves 24 are located above the tread buff line 95 as shown in Figure 6. This facilitates retreading. Currently in most commercial truck tire applications retreaded tires are not used in the front steer wheel position. This is because the single wheel position of the each steer axle means that a tread separation or sudden loss of pressure can be more problematic when compared to a dual wheel position axle such as the drive axles or the trailer axles.

The side grooves 24, 240 of the present invention allows this feature to be part of a precured tread, used in new tire manufacturing or in retreading. Unlike any other concept used to date, this feature will be perfectly positioned after mounting to the casing because it was molded into the precured tread originally and is never changed during a molding.

A third important point of the present invention is that this form of decoupling is very complimentary for use on the drive axle and trailer axle position when the tire is retreaded. In other words, even if the wheel axle position is changed, there appears to be no negative consequences. This is true because unlike most rib type tread decoupling concepts, there is no small appendages of rubber to cut or tear.

In essence the entire invention principle achieved by the use of side grooves 24 resides in the desensitization of the shoulder pressure to varying loads. The loads of a steer axle tire vary due to the vertical and lateral movements of the tire. The prior art tires exhibit a higher sensitivity of shoulder pressure to load variation when compared to the tire of the present invention.

Naturally the lower contact pressure achieved at the edge can be advantageous in some cases as well, but in other cases it may be beneficial to increase the contact pressure at location P₃. The side grooves 24 allow the engineer to achieve these benefits as well as was noted earlier.

With reference to Figure 6, one embodiment of the invention is shown with an enlarged view of the tire's shoulder shown in cross section.

As shown in Figure 7A the side groove 24 has the centerline angled between 0 and 10° downward relative to a normal line to the upper sidewall contour. The preferred layout is normal to the upper sidewall or treadwall 29 through a point at the centerline of the groove location. The groove 24 at the closed end or base has a groove base 24A shaped in the form of a dome. The engineer when designing a steer tire 10 should select the dome point to be located at or near the intersection of the groove centerline C and the nonskid baseline. The nonskid baseline is the extension of the nonskid depth as shown by the line 90.

A vertical line 92 drawn from the edge of the widest reinforcing belt 15 established the lateral extent of the side groove 24. For any particular tire the side groove 24 should have the end or dome point within plus or minus 10 mm of the line 92.

Ideally the side groove 24 lies at least 2 mm above the belt reinforcing structure 15. It is believed important that no part of the side grooves 24 should be below the tread to casing interface 94. Furthermore, the groove 24, 240 lies above the casing buff line for retreading which is at least 2 mm above the belts. If possible the side groove should be entirely in the tread material and not extend beyond the tread cap/base interfacial line 93.

As shown the side groove 24 has a preferred shape that is symmetrical about its centerline C although it can be asymmetrical. The width (w) of the side groove is in the range of 5.0 mm and 7.0 mm. The preferred width (w) is 6.0 mm. The depth to width ratio should be 1.6 to 2.4. The preferred ratio is 2.0. The lower portion of the radius of the dome or base 24A of the groove 24 should be as large as possible. A full radius R_{G} is the most simple design to manufacture.

With reference to Figures 7A, 7B, 7C and 7D four exemplary side grooves 24 are shown. The side groove 24 of Figure 7A is the same as was shown in Figures 1 and 6 and it has generally parallel groove walls. In Figure 7B the dome (or base) has an enlarged full radius that narrows as the side groove 24 extends to the treadwall. In Figure 7C the side groove 24 is asymmetrical about the line intersecting the dome point and extending roughly parallel to the tread surface. As shown the lower part of the groove 24 is larger and the walls of the side groove 24 are not parallel but instead have a large positive draft angle.

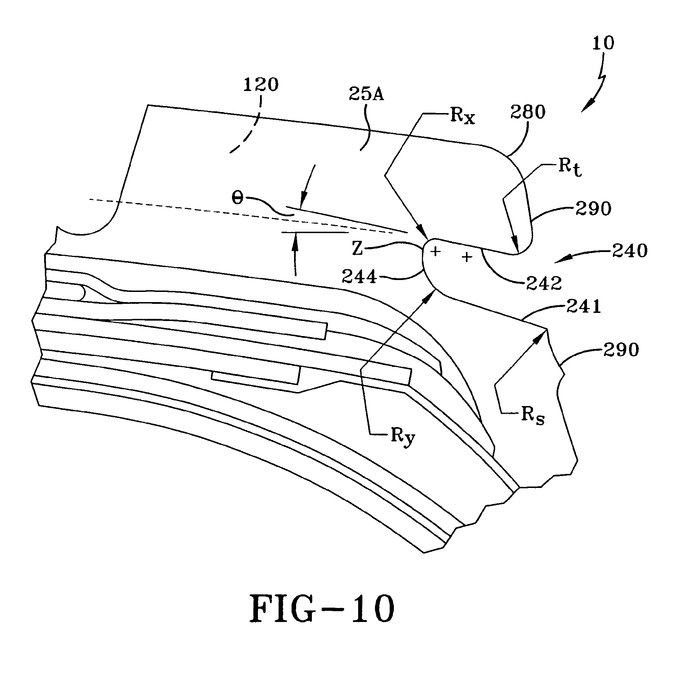

With reference to Figure 10, a further cross-sectional view of the decoupling groove is illustrated. In this embodiment in place of a full symmetrical dome or base 244 a more sophisticated asymmetric geometric profile is shown. The upper surface 242 of the groove 240 has the upper surface substantially parallel to the tread radius. As shown the surface is inclined slightly at an angle θ of 5° or more, preferably about 7°, relative to an axially drawn line.

At the inner end of the groove 240, the base 240 has a preferred profile established by two radii, Rₓ, R_{y}, the upper radius Rₓ is smaller than the larger lower radius R_{y}, as shown. Rₓ is less than 50% of R_{y}. In the embodiment shown Rₓ is about 1.5 mm while R_{y} is about 5.0 mm. As shown Rₓ is less than 30% of R_{y}.

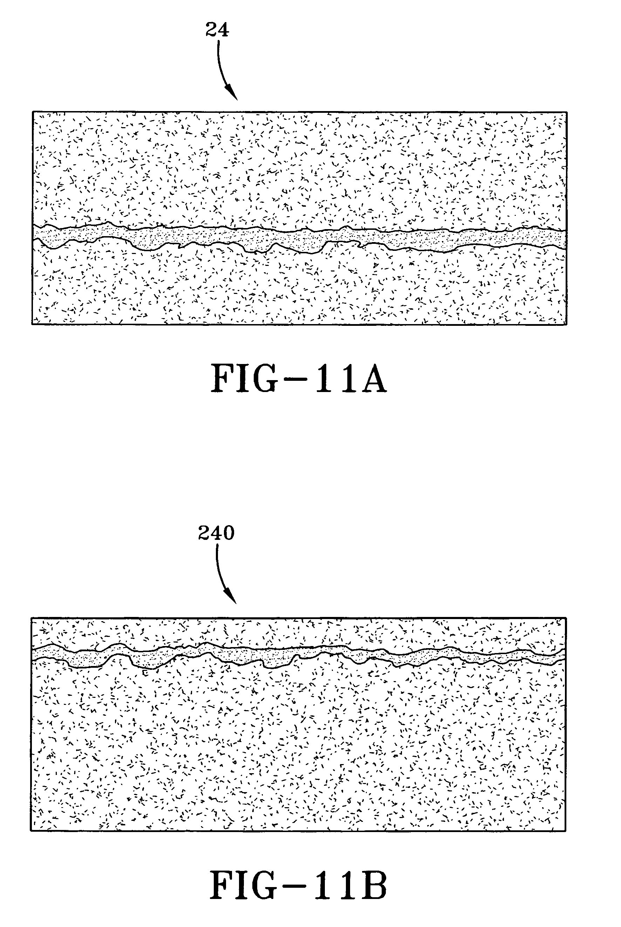

In testing it has been discovered that a simple full radius base experience a surface reversion or blemish line that is generally symmetrical to the base after being exposed to exaggerated test conditions on a round drum test machine with the tire under normal inflation and a very high extreme load. As shown in Figure 11A, the full radius base has a surface reversion occurring after about 50,000 miles under these very severe test conditions.

By employing the groove 240 in the tread this surface reversion is dramatically diminished. Importantly, the surface reversion line as shown in Figure 11B is also moved radially outwardly toward the tread. In the case of the compound radii base 240 the initiation of the blemish is reduced and moved a substantial distance away from the belts. Assuming new tread compounds permit even greater mileage to be achieved then the design of Figure 10 shows the capacity to maintain a decoupling feature well beyond that achievable in the 100,000 test miles of steer tires of current production.

As shown in Figure 10, the transition from radius Rₓ to R_{y} should occur at location Z. Location Z, preferably, is located at a distance X of at least 25% or preferably at least 33% above the groove centerline, as shown about 40% above the centerline based on the average groove width being100%. The groove centerline is the distance equidistantly spaced between the groove surfaces 242 and 241. This effectively forces the surface reversion flexure line to be as shown at location Z in Figure 11B to be occurring well above the groove centerline.

As shown it is believed desirable that the axially outer portion of the surface should have a radius Rₜ, Rₜ being about 2.0 mm. This prevents a sharp edge from occurring that might cause a cut or fracture. Rₛ has a 1.5 mm radius of curvature. Both upper radius Rₜ and the lower radius Rₛ blend into the axially outer tread wall 290 as illustrated.

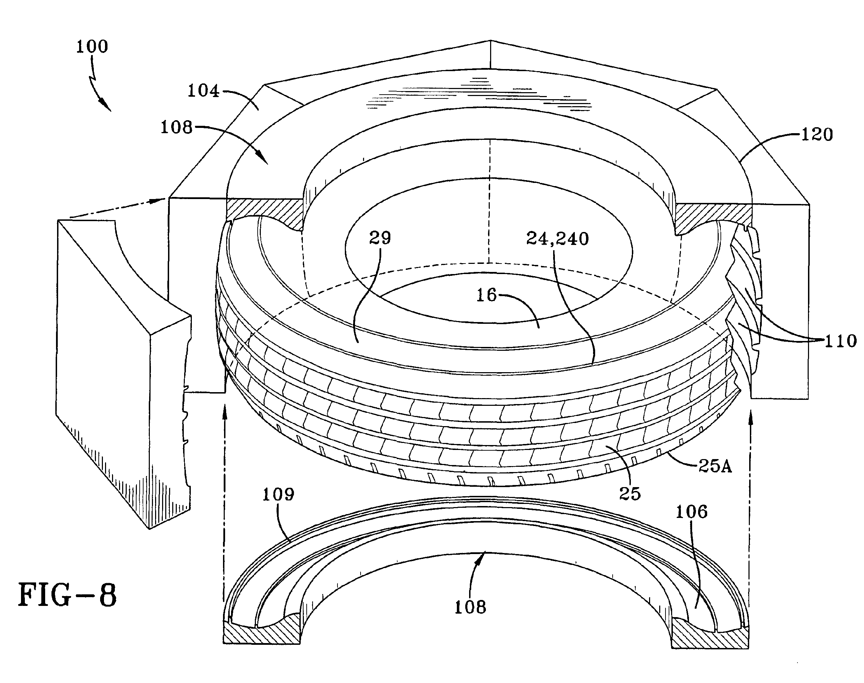

Each of the exemplary steer tires can be molded using the mold of the present invention as illustrated in Figures 8 through 10.

As shown in Figure 8, the mold 100 is made with a plurality of tread forming segments 104. The tread forming segments 104 have cavities 110 for forming tread elements that may be blocks or ribs 25,25A. The lateral edges of the tread are shown in the location which forms the upper portion of the treadwall 29.

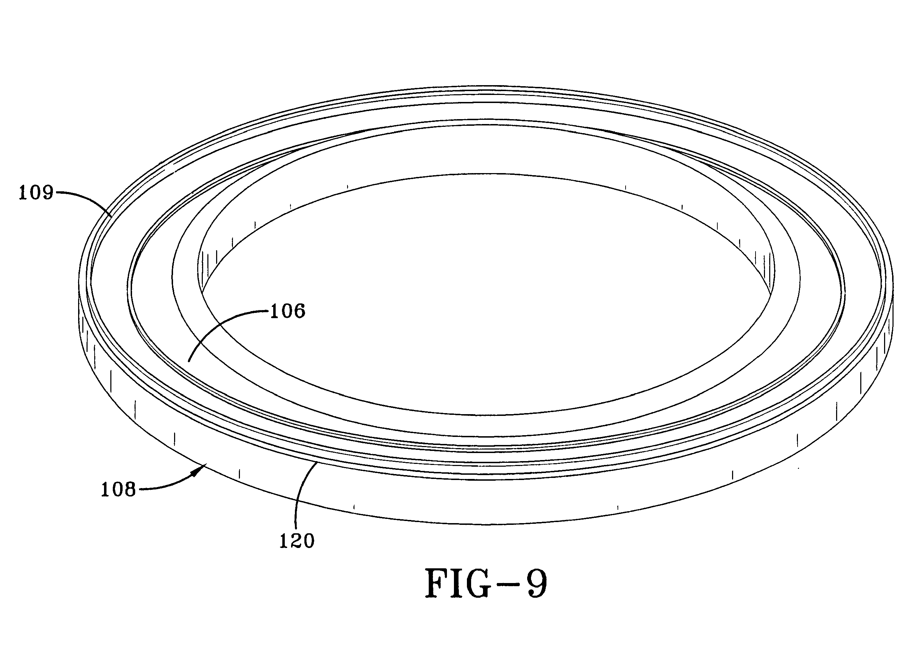

Two annular treadwall/sidewall forming plates 108 are shown in Figure 9. The plates 108 abut the segments at a mold split line 120. The sidewall 16 is formed along the molding surface 106. Indicia, lettering and the like are carved into these plates to mold the tire's trademarks and other tire labeling. Toward the radially outer portion of the surface 106 is found an annular rib 109. The rib 109 forms the side groove 24, 240 of the tire.

It is understood that the segmented mold 100 can alternatively be built in a two piece mold. The advantages of uniformity and superior quality make the segmented mold more desirable.

As shown in Figure 10 the mold 100 when closed with a green or unvulcanized tire inside forms the tread and the sidewall as the tire is cured. The treadwall/sidewall forming plates 108 extend well into the tread and thus enable the side groove 24, 240 to be very accurately positioned. Normally such features are found in the tread forming segments 104 and as one would expect the size of side grooves formed in a tread segment was very limited due to the fact the tread rubber overhangs these features. The present invention has the side grooves 24, 240 formed in the treadwall/sidewall forming plates and this permits much larger side grooves 24,240 to be employed.

It has been discovered that small side grooves close with the walls under deflection becoming a fully compressed before a sufficient reduction in pressure occurs along the tread shoulders. Accordingly, the rate of treadwear was not markedly improved. By using the larger and deeper side grooves 24, 240 as described above much improved treadwear results have been achieved. Initiation of shoulder wear when compared to prior art commercially available tires such as the Goodyear G357, the Bridgestone R227 and the Michelin XZA2 showed that mileages up to 100,000 miles were possible with the prior art tires but the present invention tire in a 11 R22.5 size achieved a remarkable 150,000 mile performance. These results are most remarkable when one considers advances of as little as 10% are often hard to achieve in such steer tires. The present invention advances the state of steer tire design.

## Claims

1. A radial ply pneumatic tire (10) for the steer axle of a commercial truck having a casing (12), the casing (12) having at least one radial ply (18) extending to a pair of radially inner beads (13) and having a belt reinforcing structure (15) disposed radially outward of the ply (18), the tire comprising a tread (20) disposed radially outward of the casing (12) having a pair of shoulder tread ribs (25A), each shoulder rib (25A) having an axially outer treadwall (29), each axially outer treadwall (29) having a laterally inward extending circumferentially continuous side groove (24, 240), the side groove (24, 240) having a groove depth (d) and a minimum groove width (w), the minimum groove width (w) being 5 mm or greater and the ratio of groove depth (d) to the groove width (w) being 1.6 to 2.4, the side groove (24, 240) having a groove base (24A) having a radiused profile (R) being at least equal to one half the minimum groove width (w); and a pair of sidewalls (14), one sidewall (14) extending radially inwardly from each shoulder rib (25A) toward each radially inner bead (13); **characterized in that** each side groove (24) has an inclined centerline (C) defined as the midway line between the groove walls, and wherein the range of centerline inclination is from +10 degrees above a horizontal axis of rotation to -10 degrees below a normal line to the outer treadwall (29).

2. The radial ply pneumatic tire of claim 1, wherein the distance between groove walls (24B, 24C) of the side groove (24, 240) narrows as the side groove (24, 240) extends from the base (24A) of the side groove to the axially outer treadwall.

3. The radial ply pneumatic tire of claim 1 or 2, wherein the tread (20) has at least one full depth groove extending from the surface of the tread (20) to a bottom, the radial depth of the at least one full depth groove defines the tread's nonskid depth, wherein the radial thickness of the tread (20) at the axially outer treadwall (29) as measured from the side groove (24, 240) to the tread surface equals 50% of the tread's nonskid depth.

4. The radial ply pneumatic tire of any of the preceding claims, wherein the radially inner groove wall (24B) of side groove (24) extends to a radial depth above the casing buff line (95) for retreading.

5. The radial ply pneumatic tire of any of the preceding claims wherein the side groove (24, 240) extends to a radial depth at least 2.0 mm radially directly above the belt reinforcing structure (15).

6. The radial ply pneumatic tire of any of the preceding claims wherein the radiused profile (R) comprises a radius curvature having an upper radius (Rₓ) and a lower radius (R), the upper radius (Rₓ) being smaller than the lower radius (R_{y}).

7. The radial ply pneumatic tire of claim 6, wherein the upper radius (Rx) is less than 50% of the lower radius (R_{y}).

## Patentansprüche

1. Ein Radial-Luftreifen (10) für die Lenkachse eines kommerziellen Lastkraftwagens, mit einem Mantel (12), wobei der Mantel (12) zumindest eine Radiallage (18), die sich zu einem Paar radial innerer Wülste (13) erstreckt, und eine radial auswärts von der Lage (18) angeordnete Gürtelverstärkungsstruktur (15) aufweist, wobei der Reifen eine radial auswärts vom Mantel (12) angeordnete Lauffläche (20) umfasst, welche ein Paar Schulterprofilrippen (25A) hat, wobei jede Schulterrippe (25A) eine axial äußere Laufflächenwand (29) hat, wobei jede axial äußere Laufflächenwand (19) eine sich lateral einwärts erstreckende, in Umfangsrichtung durchlaufende Seitenrille (24, 240) hat, wobei die Seitenrille (24, 240) eine Rillentiefe (d) und eine Mindestrillenbreite (w) hat, wobei die Mindestrillenbreite (w) etwa 5 mm oder mehr beträgt und das Verhältnis der Rillentiefe (d) zu der Mindestrillenbreite (w) 1,6 bis 2,4 ist, wobei die Seitenrille (24, 240) eine Rillenbasis (24A) mit einem mit einem Radius versehenen Profil (R) hat, das zumindest gleich der Hälfte der Mindestrillenbreite (w) ist; und ein Paar Seitenwände (14), wobei eine Seitenwand (14) sich radial nach innen von jeder Schulterrippe (25A) zu jedem radial inneren Wulst (13) erstreckt; **dadurch gekennzeichnet, dass** jede Seitenrille (24) eine geneigte Mittellinie C hat, die als die Linie auf halber Strecke zwischen den Rillenwänden definiert ist, und wobei der Bereich der Neigung der Mittellinie von +10 Grad über einer horizontalen Rotationsachse bis -10 Grad unter einer Normalen zu der äußeren Laufflächenwand (29) ist.

2. Der Radial-Luftreifen gemäß Anspruch 1, wobei sich der Abstand zwischen den Rillenwänden (24B, 24C) der Seitenrille (24, 240) verengt, wenn die Seitenrille (24, 240) sich von der Basis (24A) der Seitenrille zu der axial äußeren Laufflächenwand erstreckt.

3. Der Radial-Luftreifen gemäß Anspruch 1 oder 2, wobei die Lauffläche (20) zumindest eine Rille mit voller Tiefe, die sich von der Oberfläche der Lauffläche (20) zu einem Boden erstreckt, hat, wobei die radiale Tiefe der zumindest einen Rille mit voller Tiefe die Profiltiefe der Lauffläche definiert, wobei die radiale Dicke der Lauffläche (20) an der axial äußeren Laufflächenwand (29), gemessen ab der Seitenrille (24, 240) zu der Laufflächen-Oberfläche, gleich 50% der Profiltiefe der Lauffläche ist.

4. Der Radial-Luftreifen gemäß einem der vorgenannten Ansprüche, wobei die radial innere Rillenwand (24B) der Seitenrille (24) sich bis zu einer radialen Tiefe über der Mantelabrauhlinie (95) für das Runderneuern erstreckt.

5. Der Radial-Luftreifen gemäß einem der vorgenannten Ansprüche, wobei die Seitenrille (24, 240) sich bis zu einer radialen Tiefe von zumindest 2,0 mm radial direkt über der Gürtelverstärkungsstruktur (15) erstreckt.

6. Der Radial-Luftreifen gemäß einem der vorgenannten Ansprüche, wobei das mit einem Radius versehene Profil (R) eine Radiuskrümmung mit einem oberen Radius (Rₓ) und einem unteren Radius (R_{y}) umfasst, wobei der obere Radius (Rₓ) kleiner als der untere Radius (R_{y}) ist.

7. Der Radial-Luftreifen gemäß Anspruch 6, wobei der obere Radius (Rₓ) weniger als 50% des unteren Radius (R_{y}) beträgt.

## Revendications

1. Bandage pneumatique à nappe radiale (10) pour l'essieu directeur d'un camion commercial, comportant une carcasse (12), la carcasse (12) possédant au moins une nappe radiale (18) s'étendant jusqu'à une paire de talons internes en direction radiale (13) et possédant une structure de renforcement de ceinture (15) disposée à l'extérieur de la nappe (18) en direction radiale, le bandage pneumatique comprenant une bande de roulement (20) disposée à l'extérieur de la carcasse (12) en direction radiale, possédant une paire de nervures de bande de roulement d'épaulement (25A), chaque nervure d'épaulement (25A) possédant une paroi de bande de roulement (29) externe en direction axiale, chaque paroi de bande de roulement (29) externe en direction axiale possédant une rainure latérale continue en direction circonférentielle (24, 240) s'étendant vers l'intérieur en direction latérale, la rainure latérale (24, 240) possédant une profondeur de rainure (d) et une largeur de rainure minimale (w), la largeur de rainure minimale (w) s'élevant à 5 mm ou plus et le rapport de la profondeur de rainure (d) à la largeur de rainure (w) s'élevant de 1,6 à 2,4, la rainure latérale (24, 240) possédant une base de rainure (24A) comportant un profil arrondi (R) qui est au moins égal à la moitié de la largeur de rainure minimale (w) ; et une paire de flancs (14), un flanc (14) s'étendant vers l'intérieur en direction radiale à partir de chaque nervure d'épaulement (25A) en direction de chaque talon interne en direction radiale (13) ; **caractérisé en ce que** chaque rainure latérale (24) possède une ligne médiane inclinée (C) définie comme étant la ligne s'étendant à mi-distance entre les parois de rainure, la plage d'inclinaison de la ligne médiane s'étendant de +10 degrés au-dessus de l'axe horizontal de rotation à -10 degrés en dessous d'une ligne perpendiculaire à la paroi de bande de roulement externe (29).

2. Bandage pneumatique à nappe radiale selon la revendication 1, dans lequel la distance entre les parois de rainures (24B, 24C) de la rainure latérale (24, 240) se rétrécit au fur et à mesure que la rainure latérale (24, 240) s'étend à partir de la base (24A) de la rainure latérale jusqu'à la paroi de bande de roulement externe en direction axiale.

3. Bandage pneumatique à notre radiale selon la revendication 1 ou 2, dans lequel la bande de roulement (20) possède au moins une rainure de profondeur totale s'étendant depuis la surface de la bande de roulement (20) jusqu'à la base, la profondeur radiale de ladite au moins une rainure de profondeur totale définissant la profondeur minimale de la bande de roulement.

4. Bandage pneumatique à nappe radiale selon l'une quelconque des revendications précédentes, dans lequel la paroi de rainure (24B) interne en direction radiale de la rainure latérale (24) s'étend jusqu'à une profondeur radiale au-dessus de la ligne de ponçage de carcasse (95) pour le rechapage.

5. Bandage pneumatique à nappe radiale selon l'une quelconque des revendications précédentes, dans lequel la rainure latérale (24, 240) s'étend jusqu'à une profondeur radiale d'au moins 2,0 mm en direction radiale directement au-dessus de la structure de renforcement de ceinture (15).

6. Bandage pneumatique à nappe radiale selon l'une quelconque des revendications précédentes, dans lequel le profil arrondi (R) comprend une courbure possédant un rayon supérieur (Rₓ) et un rayon inférieur (R_{y}), le rayon supérieur (Rₓ) étant plus petit que le rayon inférieur (R_{y}).

7. Bandage pneumatique à nappe radiale selon la revendication 6, dans lequel le rayon supérieur (Rₓ) représente moins de 50 % du rayon inférieur (R_{y}).
